Europäisches Patentamt

European Patent Office

Office européen des brevets

(11) Publication number: **0 127 854**
**B1**

# EUROPEAN PATENT SPECIFICATION

(45) Date of publication of patent specification: **04.11.87**

(21) Application number: **84105967.8**

(22) Date of filing: **25.05.84**

(51) Int. Cl.⁴: **F 15 B 15/24, B 23 Q 16/00**

(54) **Device for positioning workpieces in machines.**

(30) Priority: **02.06.83 IT 2142683**

(43) Date of publication of application:
**12.12.84 Bulletin 84/50**

(45) Publication of the grant of the patent:
**04.11.87 Bulletin 87/45**

(84) Designated Contracting States:
**CH DE FR GB LI NL**

(56) References cited:
**EP-A-0 078 496**
**US-A-3 368 433**

(73) Proprietor: **TEKMA KINOMAT S.p.A.**
**Via E. Fermi, 635**
**I-21042 Caronno Pertusella (Varese) (IT)**

(72) Inventor: **Camardella, Giuseppe**
**Via Miola, 1**
**I-21047 Saronno (Varese) (IT)**

(74) Representative: **Faggioni, Giovanmaria, Dr. et al**
**Fumero-Studio Consulenza Brevetti**
**Widenmayerstrasse 4/I**
**D-8000 München 22 (DE)**

Courier Press, Leamington Spa, England.

## Description

The present invention relates to a device allowing to move cyclically a workpiece between two positions, with possibility to adjust the stroke length in a continuous and autonomous manner.

It can be applied in any highly productive machines, wherein the motion of the workpieces and their positioning is provided to take place with special rapidity and precision.

According to a widely spread technique, the aforecited machines make use of pneumatic cylinders. Considering the nature of the pneumatic cylinder, in order to obtain a precise positioning of the workpiece moved thereby, use is normally made of adjustable mechanical stops. This technique is used, with excellent results, whenever the end-of-stroke position of the piston — once it has been adjusted at the moment of setting or testing the machine — no longer has to be changed for long periods of time.

It is of course possible, when the machine is designed to perform different operations, to change the position of the stops according to the type of operation. However, such changes of position, and the subsequent adjustments, involve fairly long and complicated manoeuvres, as they require mechanical operations, whereby it is unthinkable to adopt this technique when changes of operation have to be performed quite frequently, or even according to predetermined cycles.

In this latter case, in replacement of the pneumatic piston, a movable slider is normally used, acting as workpiece carrier and being controlled, for instance, by a screw and nut system, operated by a direct current motor with feedback adjustment (closed ring control). In fact, with motors of this type, the stroke of the slider is followed electronically without interruption and the stopping thereof is hence controlled with extreme precision.

These control and operation systems have however the drawback of being far more complicated than the pneumatic cylinder system; they require highly powerful electric motors and consequently involve very high costs. Furthermore, they cause the slider to move less rapidly and they give rise to problems of wear of the screw and nut, such as to create difficulties in the long run with the precision adjustment of the slider position.

The EP—A—78496 describes a device which comprises a pneumatic piston with a lateral projection designed to come in contact with one or two adjustable stops, so as to limit the piston stroke in one or two directions. Thestops are mounted in an adjustable position on mandrels parallel to the piston axis. According to a first embodiment, the stops are manually adjustable along the mandrels; according to a further embodiment, the mandrels are in the form of screws and they engage into a threaded hole of the stops so that, through a rotation of the mandrels, a shifting of the stops is obtained.

The aforementioned device is however not suitable for use in high precision machine tools and, more particularly, in machines for the automatic positioning of chips on printed circuits, which require a high precision in the positioning — for example, with tolerances of the order of 1 to 3 millimeter hundredths — and a high operating frequency, i.e. a high frequency of the piston strokes. In fact, in the device of the EP—A—78496, on one hand the threaded hole of the stops is subject to fast wear, which determines the rapid forming of too much slack, and on the other hand the repeated bumps. of the piston against the stops can cause (also owing to the slack between the threading of the holes of the stops and the threading of the mandrels) a rotation of the mandrels and consequently a change in the position of the stops. Both these circumstances are prejudicial to the necessary precision requirements, since the required tolerances can no longer be met after a relatively short period of use.

The object of the present invention is therefore to solve the aforementioned problems in a device of the type of that described in the EP—A—78496, comprising means to adjust the position of the stop, in the form of a screw rotating and not sliding parallel to the piston motion direction and of a screw-nut associated to said stop and sliding but not rotating in respect of said screw, as well as means to control the rotation of the screw. In particular, the object of the invention is to realize a device which preserves — at relatively low costs — the characteristics of simplicity and rapidity of the piston system, but which allows to satisfy requirements of high precision in the positioning with high operating frequencies.

According to the present invention, this object is obtained by means of a device of the aforementioned type, which is characterized in that a portion of the screw-nut is in the form of a jaw member, hinged onto the body of the screw-nut, and in that there are provided, on one hand, spring means to press said jaw member against the screw and, on the other hand, release means to open the jaw member before operating the means to control the rotation of the screw.

This construction allows in fact to obtain two results, that is — on one hand — to practically eliminate the wear of the screw and screw-nut threads on account of the fact that, when the screw is rotating, the jaw member of the screw-nut is open and there is hence an extra slack running fit between the nut and the screw-nut, which practically eliminates all friction, and — on the other hand — to guarantee a high precision positioning, on account of the fact that the closing of the jaw member, in the selected stop position, fully takes up slack and actually determines a perfectly reliable locking of the screw-nut onto the screw, thereby eliminating all posibility of relative movement even under the repeated bumps of the working piston.

Furthermore, according to a preferred embodiment of the invention, the screw ends are mounted on thrust bearings. This construction also allows to prevent any end float of the screw, which improves even further the precision in the axial positioning of the screw-nut.

The invention will now be described more in detail, with reference to the accompanying drawings, in which:

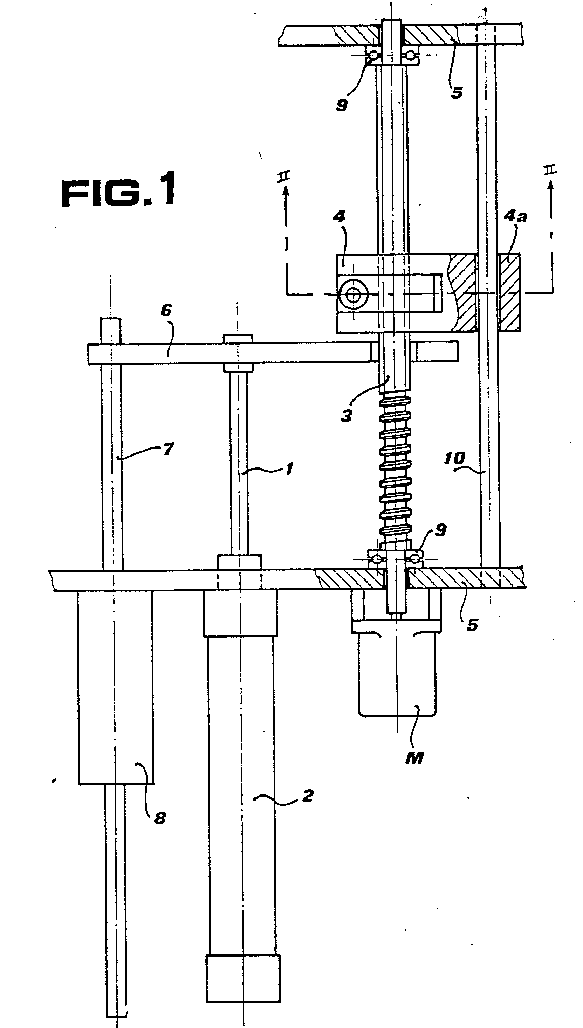

Fig. 1 is a diagrammatic plan view of the device according to the present invention; and

Fig. 2 is a section view of the screw-nut, along the line II—II of Figure 1.

With reference to the drawings, the device according to the present invention essentially comprises a pneumatic piston-cylinder unit 1—2, and of a worm screw 3, with respective screw nut 4, whose rotation axis is parallel to the axis of said piston-cylinder unit 1—2. Both the cylinder 2 and the screw 3 are firmly mounted to the frame 5 of the machine.

The piston 1 carries at its free end a piece 6 — like a worktable or a carrier for a workpiece — and is movable between a closing position in which it is completely inside the cylinder 2, and an opening position in which the piece 6 rests against the screw nut 4.

The piece 6 is moreover fixed to a cylindrical bar 7, sliding slackless inside a sleeve 8. This arrangement allows to discharge the stresses acting on the piece 6 without this latter undergoing any warping.

The worm screw 3 is mounted on the frame 5, at both ends, by means of thrust bearings 9 which prevent any displacement thereof in the axial direction but of course allowing the rotation. Said screw is driven into rotation by an electric motor M with position control. The motor M is preferably a step-by-step motor, by means of which the positioning of the screw nut 4 can easily be programmed in any predetermined position along the worm screw 3.

According to the present invention the motor M has a low power because it has to change the position of the screw nut 4, which is very light and not — as in the above cited known technique — the piece 6 (worktable or workpiece) which may have a considerable weight. Therefore the motor M has a very reduced dimension and relatively low costs.

The screw nut 4 has a pierced projection 4a allowing it to freely slide along a service bar 10, also fixedly connected to the frame 5 and parallel to the worm screw 3, in order to prevent the screw nut 4 from rotating about the screw 3 during rotation of this latter.

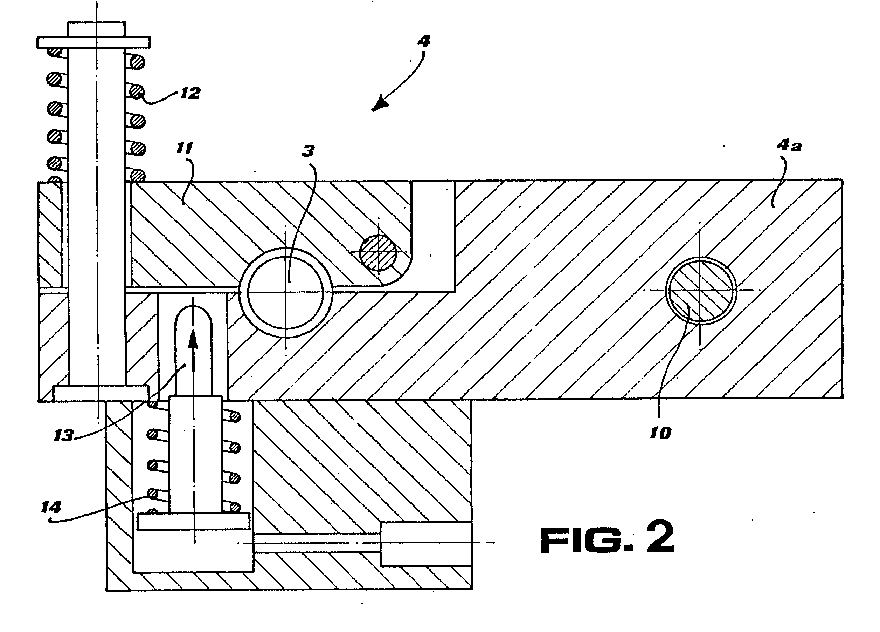

As better shown in figure 2, the screw nut 4 is also provided with a jaw 11 which, under the action of the spring 12, provides to lock said screw nut on the threads of the screw 3 during the alternate stroking of the piston 1. On changing operation, when the screw nut 4 has to be moved to another position, the piston 1 is stopped and, before operating the motor M, the pin 13 — normally kept in a rest position by the spring 14 — is pneumatically operated and provides to open the jaw 11, overcoming the resistance of the spring 12. At this point, the screw nut 4 is free to slide with a minimum effort under the action of the motor M into the wanted position.

The working of the heretofore described device is quite evident, and the extreme simplicity and easy use thereof appear at once clear.

The jaw system 11 allows in fact to lock, in a fully reliable manner, the screw nut 4 in the wanted position, preventing even the slightest movements during a same series of operations. Between one series of operations and the next, the shifting of the screw nut 4 is obtained in a very fast and precise manner, which may eventually be planned a priori through an appropriate planning computer, acting on the feed of the step-by-step motor M and on the operation of the pin 13.

This arrangement allows to obtain the fundamental advantage of preserving, on one side, the control of the movements of the piece 6 through pneumatic piston — which is simpler in the structure and faster in the working — realizing, on the other side, the precise adjustment of the piece position thanks to the automatic setting of the stop positioning, obtained through simple and economic means.

It should then be noted that the present invention has allowed to solve completely also the wear problem between screw and nut which, as seen heretofore, provides considerable drawbacks in the known art. This result is obtained particularly for the fact that, when the worm screw 3 is made to rotate, the jaw 11 of the screw nut is open, and therefore the friction between screw and nut is minimum or almost null.

**Claims**

1. Device for shifting a piece (6) in an operating machine by means of a pneumatic driving piston (1), comprising at least one stop for limiting the piston stroke, means (3, 4) to adjust the position of said stop, in the form of a screw (3) rotating and not sliding parallel to the piston motion direction and of a screw-nut (4) associated to said stop and sliding but not rotating in respect of said screw, and means (M) to control the rotation of the screw (3), said device being characterized in that a portion of the screw-nut (4) is in the form of a jaw member (11), hinged on the body of the screw-nut, and in that there are provided, on one hand, spring means (12) to press said jaw member (11) against the screw (3) and, on the other hand, release means (13, 14) to open the jaw member (11) before operating the means (M) to control the rotation of the screw (3).

2. Device as in claim 1, wherein said screw (3) has both ends mounted on thrust bearings (9) to prevent any end float of the screw (3).

3. Device as in claim 1, wherein said release means (13, 14) consist of a pin (13), pneumatically operated to cause the opening of said jaw member (11) against the opposition of a return spring (14).

4. Device as in claim 1, wherein said screw-nut (4) is prevented from rotating thanks to the cooperation of a pierced projection (4a) of the screw-nut (4) with a fixed service bar (10) parallel to said screw (3).

5. Device as in claim 1, wherein the means (M) to control the rotation of the screw (3) consist of a step-by-step motor.

## Patentansprüche

1. Vorrichtung zum Einführen eines Stückes in eine betriebene Maschine mit Hilfe eines pneumatischen Antriebskolben und wenigstens eines Stopps zum Begrenzen des Kolbenhubs, die Mittel zum Justieren der Position besagten Stopps in der Form einer Schraube, die dehend und nicht parallel zu der Kolbenbewegungsrichtung verschiebbar ist, und einer Schraubenmutter, die dem besagten Stopp zugeordnet und in Bezug auf besagte Schraube gleitend aber nicht rotierend ist, als auch Mittel zum Steuern der Schraubendrehung umfaßt, wobei besagte Vorrichtung dadurch gekennzeichnet ist, daß ein Teil der Schraubenmutter (4) in der Form eines Klemmbackenteils (11) ausgebildet ist, das an den Körper der Schraubenmutter angelenkt ist, und dadurch, daß auf der einen Seite Federmittel (12), um besagtes Klemmbackenteil (11) gegen die Schraube (3) zu pressen, und auf der anderen Seite Lösemittel (13, 14) vorgesehen sind, um das Klemmbackenteil (11) zu öffnen, bevor die Mittel (M) zum Steuern der Drehung der Schraube (3) betrieben werden.

2. Vorrichtung nach Anspruch 1, wobei beide Enden besagter Schraube (3) in Anschlaglager (9) montiert sind, um jedes Endspiel der Schraube (3) zu verhindern.

3. Vorrichtung nach Anspruch 1, wobei besagte Lösungsmittel (13, 14) aus einem Stift (13) bestehen, der pneumatisch betrieben wird, um die Öffnung besagter Klemmbackenteile (11) entgegen der Wirkung einer Rückholfeder (14) zu bewirken.

4. Vorrichtung nach Anspruch 1, wobei besagte Schraubenmutter (4) dadurch an der Rotation gehindert wird, daß ein durchbohrter Fortsatz (4a) der Schraubenmutter (4) mit einer festen Wartungsstange (10) parallel zu besagter Schraube (3) zusammenarbeitet.

5. Vorrichtung nach Anspruch 1, wobei die Mittel (M) zum Steuern der Drehung der Schraube (3) aus einem Schrittmotor bestehen.

## Revendications

1. Dispositif pour déplacer une pièce (6) dans une machine en fonctionnement au moyen d'un piston d'entraînement pneumatique (1), comprenant au moins une butée pour limiter la course du piston, des moyens (3, 4) pour ajuster l'emplacement de la dite butée, sous la forme d'une vis (3) tournant et ne coulissant pas parallèlement à la direction de mouvement du piston et d'un écrou (4) associé à ladite butée et coulissant mais ne tournant pas par rapport à ladite vis, et des moyens (M) pour commander la rotation de la vis (3), ledit dispositif étant caractérisé en ce qu'une partie de l'écrou (4) se présente sous la forme d'un élément-mâchoire (11), articulé sur le corps de l'écrou, et en ce qu'il est prévu, d'une part, un moyen formant ressort (12) pour presser ledit élément-mâchoire (11) contre la vis (3) et, d'autre part, des moyens de libération (13, 14) pour ouvrir l'élément-mâchoire (11) avant la mise en action des moyens (M) pour la commande de la rotation de la vis (3).

2. Dispositif selon la revendication 1, dans lequel ladite vis (3) a ses deux extrémités montées sur des paliers de butée (9) pour éviter tout flottement d'extrémité de la vis (3).

3. Dispositif selon la revendication 1, dans lequel les dits moyens de libération (13, 14) sont constitués par un doigt (13), commandé pneumatiquement pour provoquer l'ouverture dudit élément-mâchoire (11) à l'encontre d'un ressort de rappel (14).

4. Dispositif selon la revendication 1, dans lequel ledit écrou (4) est empêché de tourner grâce à la coopération d'une protubérance percée (4a) de l'écrou (4) avec une barre de service fixe (10) parallèle à ladite vis (3).

5. Dispositif selon la revendication 1, dans lequel les moyens (M) de commande de la rotation de la vis (3) sont constituées par un moteur pas-à-pas.

# FIG.1

FIG. 2